Europäisches Patentamt

European Patent Office

Office européen des brevets

(19)

(11) Numéro de publication: **0 206 853**
**B1**

(12) **FASCICULE DE BREVET EUROPEEN**

(45) Date de publication du fascicule du brevet:
**21.02.90**

(51) Int. Cl.⁴: **G06F 15/68**

(21) Numéro de dépôt: **86401032.7**

(22) Date de dépôt: **14.05.86**

(54) Procédé et dispositif pour identifier les contours fermes d'objets placés sur une surface.

(30) Priorité: **22.05.85 FR 8507670**

(43) Date de publication de la demande:
**30.12.86 Bulletin 86/52**

(45) Mention de la délivrance du brevet:
**21.02.90 Bulletin 90/8**

(84) Etats contractants désignés:
**AT BE CH DE GB IT LI SE**

(56) Documents cités:
**FR-A- 2 507 419**
**FR-A- 2 550 403**

**ICASSP 81 PROCEEDINGS, Atlanta, Georgia, US, 30 mars-1 avril 1981, vol. 3, pages 1129-1131, IEEE, New York, US; V. CAPPELLINI et al.: "A new operator for edge detection"**

(73) Titulaire: **TELEMECANIQUE, 43-45, Boulevard Franklin Roosevelt, F-92504 Rueil-Malmaison Cedex(FR)**

(72) Inventeur: **Glorieux, Francis, 4, rue.Eugène Delacroix, F-38000 Grenoble(FR)**

(74) Mandataire: **Marquer, Francis et al, Cabinet Moutard 35, Avenue Victor Hugo, F-78960 Voisins le Bretonneux(FR)**

ACTORUM AG

**Description**

La présente invention concerne un procédé d'identification de contours fermés d'objets placés sur une surface plane et contenus dans un champ visuel, ainsi qu'un dispositif assurant la mise en oeuvre de ce procédé.

Il existe de nombreux domaines, comme par exemple en robotique, où il est nécessaire de faire une identification des contours fermés des objets, ainsi qu'une détermination de certains paramètres liés à chacun des objets, tels que leur périmètre, leur surface, leur centre de gravité, etc...

De façon plus précise, on définit l'identification des contours fermés des objets disposés sur une surface plane, comme étant une détermination en une seule passe, à partir d'une image binaire échantillonnée analysée séquentiellement point par point et ligne par ligne, à la fois du nombre des contours fermés de cette image et pour chaque contour, des coordonnées du dernier point analysé qualifié d'origine du contour.

On connaît déjà, d'après la demande de brevet FR 2 507 419, un procédé permettant d'identifier des contours fermés d'objets contenus dans un champ visuel en analysant lesdits contours à partir d'une image délivrée par une caméra vidéo et constituée d'une pluralité de surfaces élémentaires ou pixels répartis en lignes et en colonnes ; les pixels de cette image sont numérisés selon deux niveaux de luminance (blanc ou noir) auxquels on attribue une valeur binaire 0 ou 1. Cette analyse des contours d'objets consiste essentiellement à détecter, en un seul balayage de l'image binaire, des points caractéristiques d'un changement de direction du contour, puis à mémoriser la position de chacun des points caractéristiques détectés, ligne par ligne, ainsi que l'addresse correspondant à la position du point caractéristique précédant et/ou suivant sur une même colonne chacun des points caractéristiques en vue d'obtenir une information de chaînage.

Toutefois, ce processus d'identification des contours d'objets d'une image présente un inconvénient majeur. En effet, comme on détecte chacun des points caractéristiques d'un changement de direction des contours des objets, la mémorisation subséquente de leurs positions respectives nécessite le stockage d'une grande quantité d'informations, donc de l'emploi d'un grand nombre de mémoires, ce qui rend plus complexe et plus coûteux le dispositif assurant la mise en oeuvre de ce processus.

La présente invention a pour but de remédier à cet inconvénient en proposant un procédé d'identification de contours fermés d'objets par analyse desdits contours, qui est simple et facile à mettre en oeuvre, et qui, de plus, est réalisé avec des temps d'analyse très courts.

A cet effet, l'idée inventive du procédé objet de l'invention réside dans le fait qu'on mémorise uniquement, au fur et à mesure de l'analyse séquentielle de chacun des pixels formant l'image binaire, ligne par ligne, la position de deux extrémités associées, représentées sous forme de segments élémentaires, d'un même contour d'objet, ce qui permet de détecter aisément la fin de ce contour lorsque les deux extrémités associées se rejoignent.

L'invention a donc pour objet un procédé pour identifier les contours fermés d'objets placés sur une surface et contenus dans un champ visuel, consistant :

- à former une image binaire échantillonnée du champ visuel selon une répartition en lignes et en colonnes de pixels contigus de forme polygonale, repérés par des indices de ligne et de colonne et étant affectés d'une première valeur binaire dans le cas de leur appartenance aux objets ou d'une seconde valeur binaire différente de la première dans le cas contraire, de sorte que les contours d'objets sont constitués. d'un ensemble de segments élémentaires appelés transitions se présentant les unes par rapport aux autres selon au moins deux directions différentes et séparant chacune deux pixels adjacents de valeurs binaires respectives différentes, les pixels affectés de la première valeur binaire étant dits connexes s'ils ont de proche en proche un point ou un côté commun ;

- à analyser l'image séquentiellement point par point et ligne par ligne, à partir d'une fenêtre formée par le pixel en cours d'analyse et par des pixels voisins situés sur la ligne et la colonne précédant immédiatement la ligne et la colonne du pixel en cours d'analyse ;

caractérisé en ce que l'analyse de l'image consiste, au fur et à mesure de la prise en compte de chaque pixel :

a) à déterminer les transitions présentes dans la fenêtre ;

b) à traiter uniquement les transitions consécutives de directions respectives différentes présentes dans la fenêtre, en tenant compte de la connexité existant entre les pixels affectés de la première valeur binaire de façon à associer l'une à l'autre deux transitions dites extrêmes d'un même contour présentes dans une frontière de l'image qui est constituée par l'ensemble des pixels déjà analysés de l'image et ayant un pixel voisin non encore analysé, ce traitement consistant :

- à mémoriser la position des deux transitions extrêmes d'un même contour, qui sont associées l'une à l'autre dans la frontière de l'image ;

- à déterminer une fin de contour d'objet lorsque les deux transitions extrêmes associées l'une à l'autre se rejoignent.

Selon une autre caractéristique de l'invention, les deux transitions extrêmes d'un même contour, associées l'une à l'autre dans la frontière sont soit verticales toutes les deux, soit respectivement verticale et horizontale, et la mémorisation de leurs positions respectives consiste, au fur et à mesure de la prise en compte de chaque pixel :

- dans le cas de deux transitions extrêmes verticales associées l'une à l'autre, à stocker, pour chacune de ces deux transitions verticales, l'indice colonne la repérant dans une mémoire dont l'adresse correspond à l'indice colonne repérant sa transition verticale associée,

- dans le cas d'une transition extrême verticale associée à une transition extrême horizontale, à stocker une valeur prédéterminée dans une mémoire dont l'adresse correspond à l'indice colonne repérant la transition verticale associée, et à stocker cet indice colone dans un registre.

L'invention vise également un dispositif assurant la mise en oeuvre du procédé selon l'invention. De façon complémentaire audit dispositif, divers moyens peuvent également être prévus pour calculer le périmètre de chaque contour d'objet, ainsi que pour coder les contours d'objets en vue de déterminer certains de leurs paramètres, tels que leur surface, leur centre de gravité, etc...

D'autres caractéristiques et avantages de l'invention apparaîtront mieux dans la description détaillée qui suit et se réfère aux dessins annexés donnés uniquement à titre d'exemple et dans lesquels :

La figure 1 représente un schéma synoptique d'un mode de réalisation du dispositif d'identification de contours selon l'invention, en association avec des moyens de calcul du périmètre de chaque contour et de codage des contours ;

La figure 2 représente un exemple de contour d'objet à analyser ;

La figure 3 représente une fenêtre de codage utilisée pour l'analyse de chacun des pixels formant l'image binaire ;

La figure 4 représente un schéma explicitant la notion de frontière d'une image ;

Les figures 5a à 5c représentent un même tableau indiquant le traitement des transitions à effectuer selon diverses configurations possibles de la fenêtre de codage ;

Les figures 6a et 6b représentent respectivement les différentes étapes de l'analyse du contour d'objet selon l'exemple de la figure 2 et, sous forme simplifiée, le traitement associé à chacune de ces étapes d'analyse ;

La figure 7 représente une configuration de segments pris en compte pour le calcul de périmètre du contour d'objet illustré en exemple sur la figure 2 ; et

Les figures 8a à 8c représentent un même tableau montrant le traitement des données pour le calcul du périmètre des contours d'objets selon les mêmes configurations possibles de la fenêtre de codage illustrées sur les figures 5a à 5c.

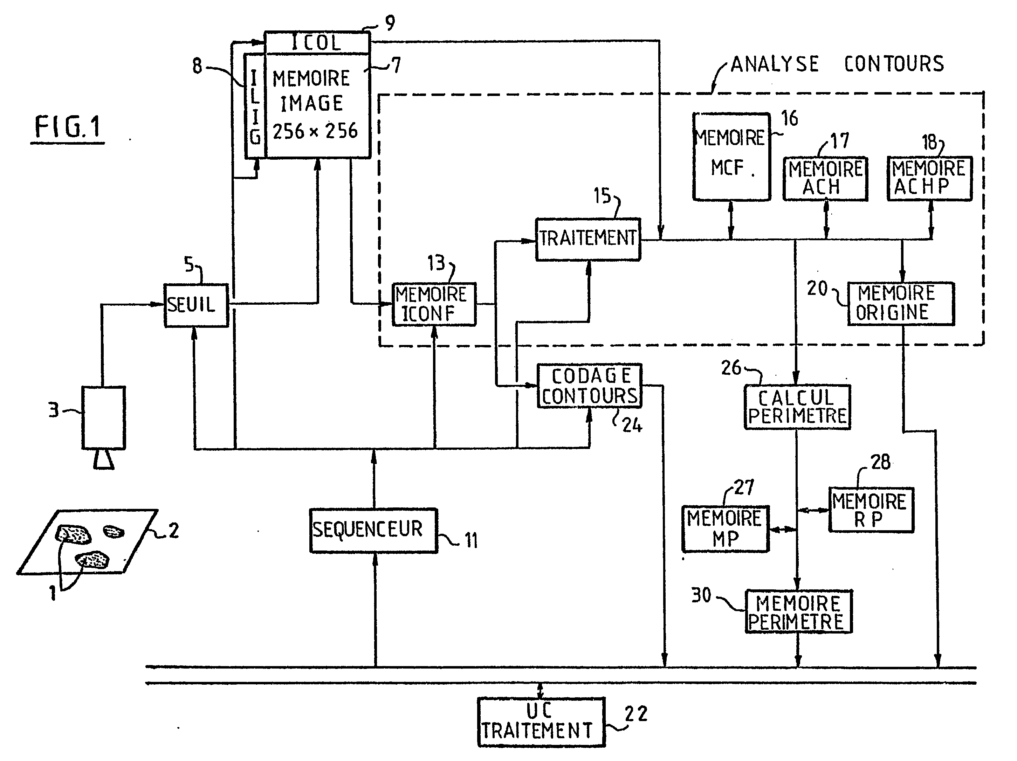

Sur la figure 1, on a représenté en 1 plusieurs objets de contours fermés, placés sur une surface plane 2 et contenus dans le champ visuel d'une caméra vidéo 3 du type par exemple comportant une matrice de 256 × 256 diodes photodétectrices. Les divers objets 1 peuvent avoir une forme quelconque et une disposition quelconque sur la surface, deux objets étant séparés par une zone de ladite surface présentant un niveau optique différent de celui des objets.

De façon classique, les diodes photodétectrices de la caméra 3 explorent en un seul balayage la surface 2, ce qui donne un quadrillage optique de la surface en surfaces élémentaires ou pixels de forme polygonale, rectangulaire par exemple, repérés chacun par un indice ligne et un indice colonne sur des axes orthonormés, et ayant chacun un certain niveau ou densité optique. Le niveau optique de chaque pixel est transformé en un niveau électrique, pour fournir en sortie de la caméra un signal vidéo donnant une image constituée d'une pluralité de pixels contigus répartis en N lignes et en N' colonnes.

Comme cela est bien connu, le signal vidéo délivré par la caméra 3 est ensuite numérisé pour chaque pixel, dans un circuit comparateur 5 à double seuil, selon deux niveaux de luminance (blanc ou noir) auxquels on attribue une valeur binaire 0 ou 1.

On obtient ainsi une image binaire constituée des pixels, par exemple de forme carrée, repérés par des indices de ligne ILIG allant de 0 à N-1 et des indices de colonne ICOL allant de 0 à N'-1, et ayant chacun un niveau optique, blanc ou noir, auquel est affectée l'une des deux valeurs binaires 0 ou 1.

Dans cette image binaire échantillonnée, il est connu de définir un objet comme l'ensemble des pixels qui sont affectés de la même valeur binaire et qui ont, de proche en proche, un point ou un côté commun, ces pixels étant alors dits liés ou connexes. Comme cela est bien connu, il s'agit d'un côté commun dans le cas de pixels de forme hexagonale, et d'un point ou d'un côté commun dans le cas de pixels de forme carrée ; à cet effet, pour la notion de connexité, on pourra se reporter à l'article "Connectivity in digital pictures" de A. ROSEN-FELD - Journal of the Association for Computing Machinery, Janvier 1970, pages 146 à 160.

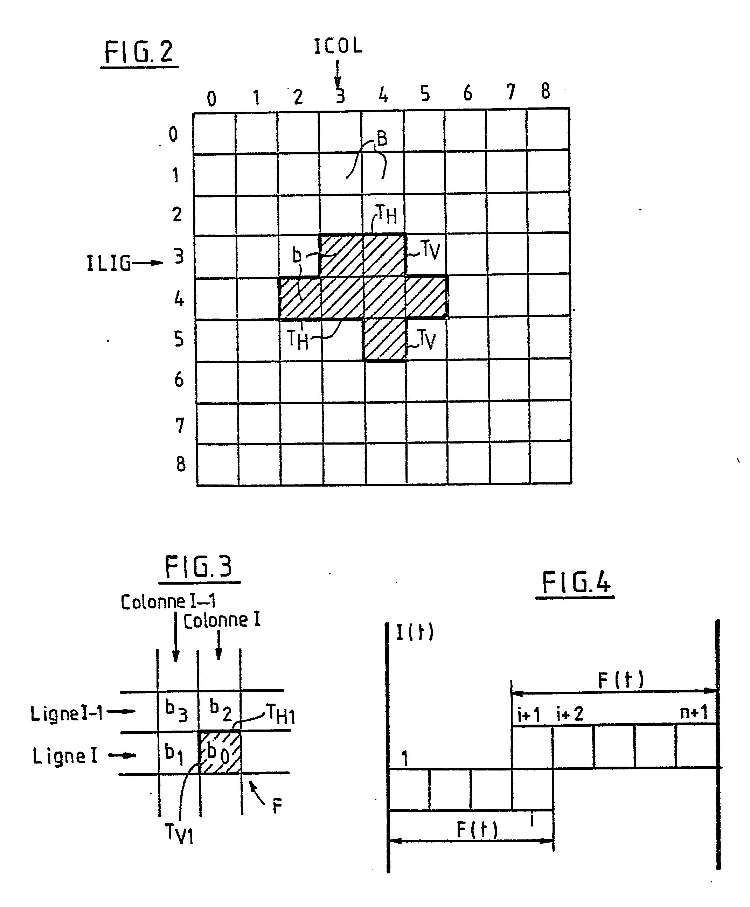

On a illustré sur la figure 2 un exemple d'une image binaire constituée d'une matrice de pixels carrés, repérés en ILIG et ICOL, dont ceux référencés en b et ayant le même niveau optique correspondant au noir (valeur binaire 1 par exemple), appartiennent à l'objet choisi, tandis que ceux référencés en B et ayant le même niveau optique correspondant au blanc (valeur binaire 0 par exemple), appartiennent quant à eux au fond de la surface plane sur laquelle est situé ledit objet.

En outre, il est également connu de définir le contour d'un objet comme l'ensemble des segments élémentaires ou transitions qui séparent chacune deux pixels adjacents de niveaux binaires respectifs différents. Ainsi, sur la figure 2 illustrant un exemple d'image binaire avec des pixels de forme carrée, on a représenté en $T_V$ et $T_H$ les transitions respectivement verticales et horizontales qui forment ensemble le contour de l'objet choisi.

On notera que les transitions d'un contour d'objet défini ci-dessus peuvent être autres qu'horizontales et verticales, ce qui est le cas en choisissant des pixels de forme, par exemple, hexagonale, sans sortir du cadre de l'invention. De manière plus générale, on pourra qualifier les transitions formant un contour d'objet en fonction d'au moins deux directions différentes, deux transitions du contour pouvant être dites soit de même direction (horizontale ou verticale par exemple), soit de directions respectives différentes (horizontale et verticale par exemple).

Après formation de l'image binaire représentative de la surface plane sur laquelle sont disposés les objets, celle-ci est mémorisée dans une mémoire 7 (figure 1) qui est associée à deux registres par exemple de huit bits, repérés en 8 et 9, et mémorisant respectivement les indices lignes ILIG et colonnes ICOL des pixels de l'image binaire.

On va maintenant décrire l'analyse séquentielle point par point, c'est-à-dire pixel par pixel, et ligne par ligne, de l'image binaire présente dans la mémoire 7, en vue de déterminer en un seul passage les coordonnées des origines respectives des contours fermés des divers objets situés sur la surface plane.

Le début de cette analyse est déclenchée par un séquenceur 11 (figure 1) pour prendre en compte chaque pixel de l'image binaire mémorisée, à partir du pixel de coordonnées ILIG = 1 et ICOL = 1 par incrémentation de ICOL par ligne, puis par incrémentation de ILIG.

De façon connue, l'analyse de chaque pixel pris en compte par des moyens de pointage de ses coordonnées, est effectuée à partir d'une fenêtre de codage formée, par exemple dans le cas de pixels carrés, par le pixel en cours d'analyse et par les trois pixels voisins situés sur la ligne et la colonne précédant immédiatement la ligne et la colonne du pixel en cours d'analyse. Les valeurs binaires respectives affectées aux quatre pixels selon cette configuration sont mémorisées dans un registre quatre bits noté ICONF et repéré en 13 sur la figure 1.

Le rôle de cette fenêtre de pixels est de permettre, lorsque lesdits pixels présentent des niveaux binaires respectifs différents, une détection des transitions de contours d'objets.

A titre illustratif et non limitatif, on a représenté sur la figure 3 la fenêtre de codage F formée des quatre pixels carrés $b_0$, $b_1$, $b_2$ et $b_3$ présentant la configuration binaire (1000), le pixel $b_0$ étant celui en cours d'analyse ; dans cet exemple de configuration, les deux transitions de contour respectivement horizontale $T_{H1}$ et verticale $T_{V1}$ sont donc détectées.

On notera qu'au maximum quatre transitions, dont deux horizontales et deux verticales, peuvent apparaître dans cette fenêtre.

Selon un aspect de l'invention, seules les transitions consécutives de directions respectives différentes qui sont détectées à intérieur de la fenêtre considérée au cours de l'analyse, comme par exemple les deux transitions consécutives horizontale et verticale illustrées sur la figure 3, sont ensuite traitées selon un algorithme de traitement que l'on expliquera dans ce qui suit.

Pour mieux faire comprendre cet algorithme, on rappellera la définition de la "frontière" d'une image à l'instant t, notée F (t) : c'est l'ensemble des pixels de I (t) ayant un voisin non encore analysé, avec I (t) représentant l'ensemble des pixels déjà analysés de l'image. Sur la figure 4, la frontière F (t) comporte n + 1 points ou pixels carrés.

En outre, on sait qu'en considérant à chaque instant un contour dont l'analyse est en cours, celui-ci présente, s'il est fermé, deux transitions extrêmes dans la frontière F (t).

Ainsi, selon un autre aspect de l'invention, le principe de base de l'algorithme de traitement utilisé consiste, au fur et à mesure de l'analyse de chaque pixel à partir de la fenêtre de codage définie précédemment et en tenant compte de la connexité des pixels, à mémoriser la position des deux transitions extrêmes d'un même contour, qui sont associées l'une à l'autre dans la frontière F (t) ; dès lors, on détecte aisément la fin d'un contour lorsque les deux transitions extrêmes associées dudit contour se rejoignent.

A cet effet, en se plaçant dans le cas de pixels de forme rectangulaire, les deux transitions extrêmes qui sont associées dans la frontière de l'image à l'instant t, sont soit verticales toutes les deux, soit respectivement verticale et horizontale, et la mémorisation de leurs positions s'effectue de la façon suivante, en repérant uniquement la position de chaque transition verticale par exemple par l'indice colonne du pixel situé à sa droite, laissant ainsi libre l'indice colonne ICOL = 0 :

- pour les deux transitions extrêmes verticales toutes les deux et associées l'une à l'autre, on stocke pour chacune d'elles, l'indice colonne du pixel la repérant dans une mémoire dont l'adresse correspond à l'indice colonne du pixel repérant sa transition associée,
- pour les deux transitions extrêmes respectivement verticale et horizontale, et associées l'une à l'autre, on stocke une valeur prédéterminée, à savoir la valeur 0 correspondant à l'indice colonne ICOL = 0 laissé libre, dans une mémoire dont l'adresse correspond à l'indice colonne du pixel repérant la transition verticale, et on stocke cet indice colonne dans un registre.

Quand à la détermination de la fin d'un contour segmenté en transitions horizontales et verticales, elle est obtenue lorsqu'il y a à la fois réunion des deux transitions extrêmes respectivement verticale et horizontale, associées l'une à l'autre dans la frontière de l'image, et identité entre, d'une part, l'indice colonne stocké dans le registre précité et repérant cette transition verticale et, d'autre part, l'indice colonne repérant le pixel en cours d'analyse.

Cet algorithme de traitement des transitions de contours est mis en oeuvre, sur la figure 1, au moyen d'un circuit de traitement 15 connecté en sortie de la mémoire 13 ICONF et associé à trois ensembles de mémorisation, à savoir une mémoire 16 notée MCF du type RAM comprenant N - 1 registres par exemple de huit bits chacun et d'adresses respectives correspondant aux indices colonnes ICOL, un seul registre 17 noté ACH par exemple de huit bits, et un registre tampon 18 noté ACHP par exemple de huits bits.

Selon le principe de l'algorithme de traitement des transitions que l'on a expliqué précédemment, ces divers registres sont utilisés de la manière suivante.

Lorsque deux transitions extrêmes verticales de la frontière appartiennent au même contour, on mémorise, d'une part, dans le registre MCF d'adresse ICOL repérant l'une des deux transitions, l'indice colonne I'COL repérant l'autre transition et, d'autre part, dans le registre MCF d'adresse I'COL, l'indice colonne ICOL.

Par contre, lorsqu'une transition extrême verticale est liée à une transition extrême horizontale dans la frontière de l'image, on mémorise, d'une part, la valeur 0 dans le registre MCF d'adresse ICOL repérant ladite transition verticale et, d'autre part, la valeur de cet indice colonne ICOL dans la mémoire ACH.

La mémoire tampon ACHP est utilisée, quant à elle, comme mémoire intermédiaire pour des transferts de valeurs entre les divers registres MCF.

Comme il apparaît sur la figure 1, une mémoire 20 permet de mémoriser, pour chaque contour, les coordonnées ILIG - 1 et ICOL - 1 du dernier pixel analysé qualifié d'origine du contour et pour lequel la fin de ce contour a été obtenue.

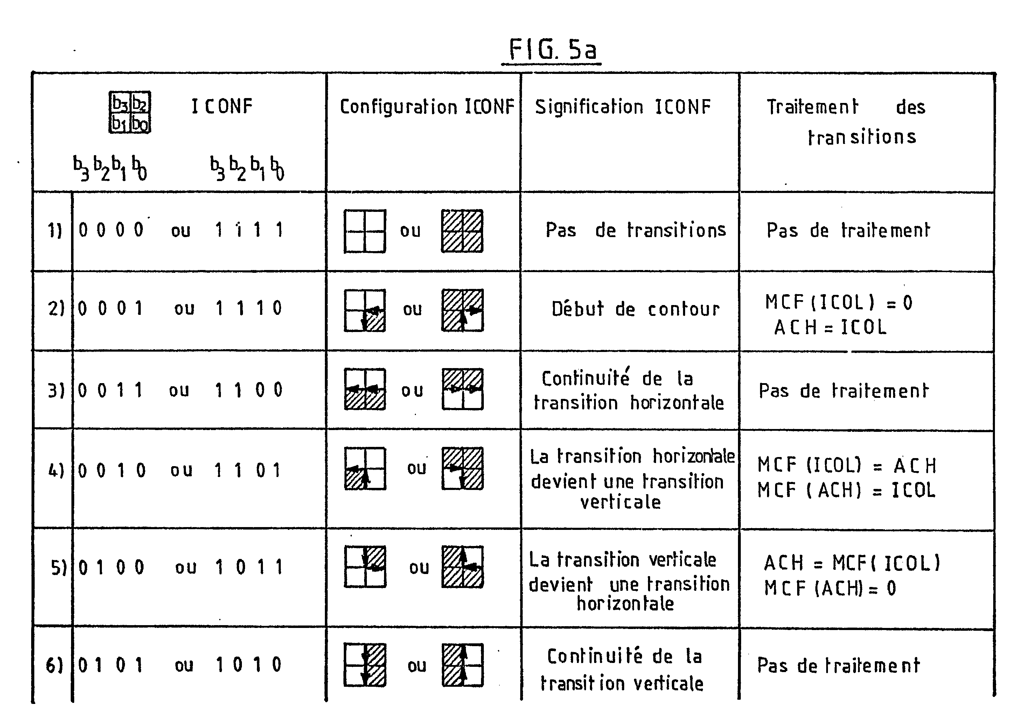

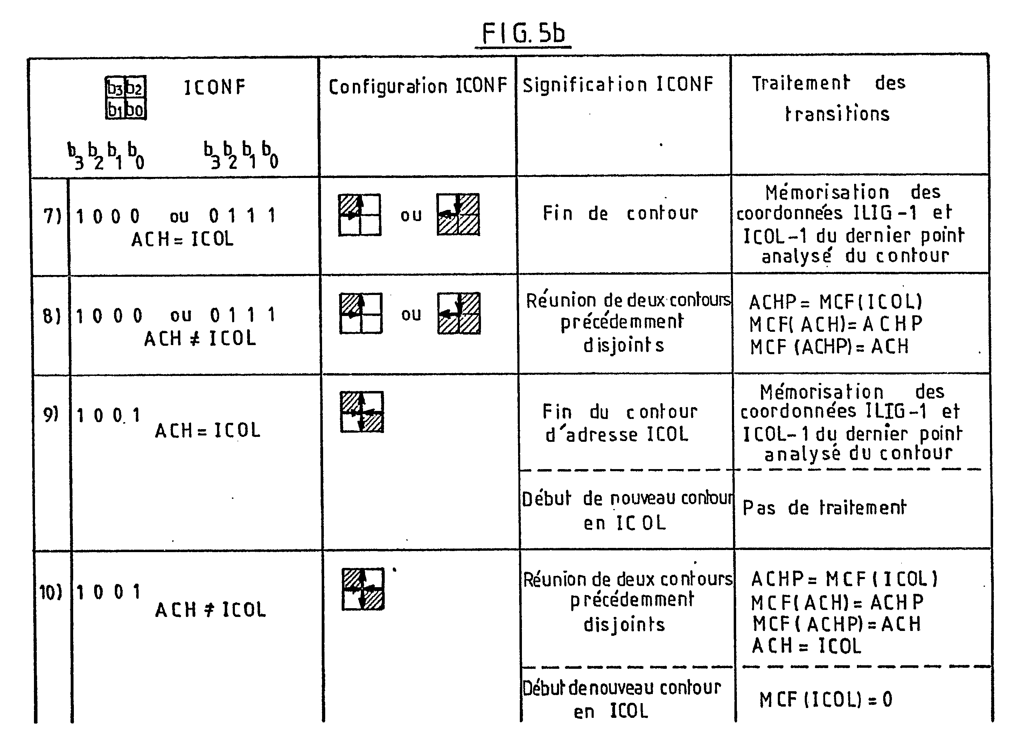

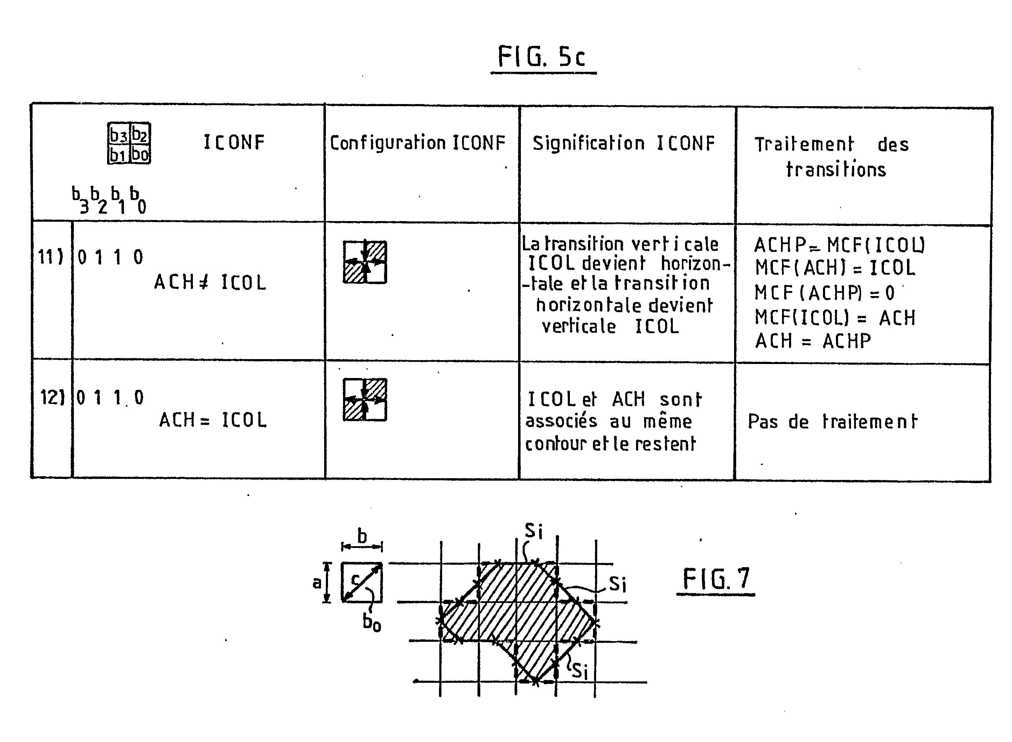

Les figures 5a à 5c représentent un tableau indiquant le traitement des transitions à effectuer à chaque séquence de l'algorithme selon les diverses configurations binaires possibles mémorisées dans la mémoire ICONF 13 (figure 1). Pour mieux faire comprendre la signification du symbole "=" utilisé dans la colonne "Traitement des transitions" de ce tableau, on précisera qu'il représente une affectation ; par exemple, pour le cinquième traitement, ACH = MCF (ICOL) signifie qu'on charge la mémoire ACH avec le contenu de la mémoire MCF d'adresse ICOL, tandis que MCF (ACH) = 0 signifie qu'on charge la mémoire MCF d'adresse ACH avec la valeur 0.

Au vu de ce tableau, l'analyse des contours fermés d'objets consiste tout d'abord à déterminer un début de contour pour une configuration binaire (0001) ou (1110), puis à suivre le déplacement des transitions extrêmes de ce contour dans la frontière tout en maintenant à jour le contenu des mémoires MCF et ACH pour garder l'association entre les deux transitions extrêmes du contour, et enfin à déterminer la fin du contour pour l'une des trois configurations binaires (1000), (0111) ou (1001) validées chacune par ACH = ICOL.

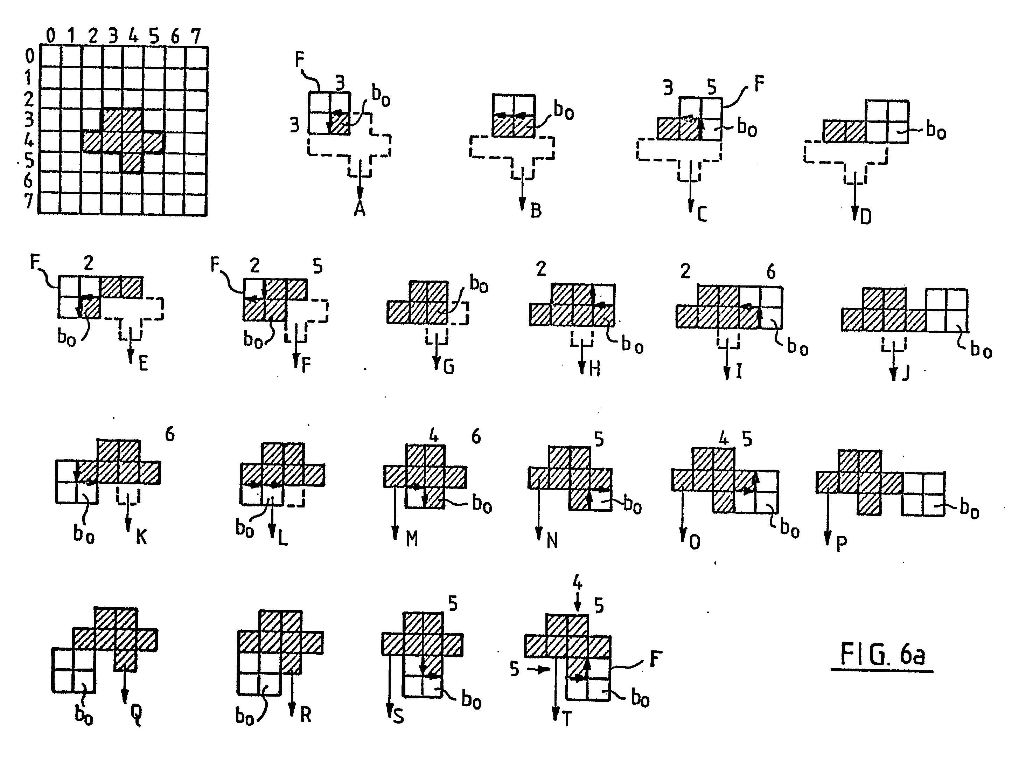

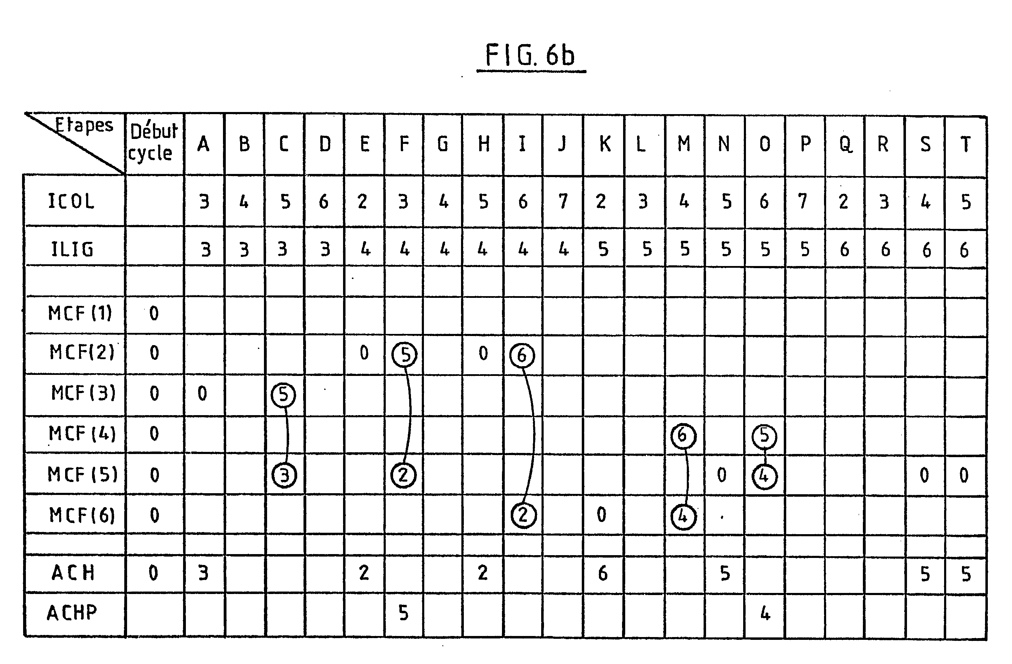

Pour illustrer sur un exemple l'algorithme de traitement utilisé, on a représenté sur les figures 6a et 6b respectivement l'analyse séquentielle point par point et ligne par ligne du contour particulier illustré sur la figure 2 et repris à gauche sur la figure 6a, et le chargement des différentes mémoires au cours de l'analyse de chaque point repéré par ses coordonnées ICOL et ILIG.

Bien que la compréhension de cet exemple de traitement soit à la portée de l'homme du métier, d'après les explications fournies précédemment à propos de l'algorithme, on indiquera néanmoins dans ce qui suit le traitement effectué à quelques étapes particulières de l'analyse.

Ainsi, après avoir déterminé à l'étape A (figure 6a) le début du contour pour la configuration binaire (0001), $b_0$ étant le pixel en cours d'analyse et F représentant la fenêtre de quatre pixels, on associe dans la frontière, à l'étape C, les deux transitions verticales repérées respectivement par les indices colonnes 3 et 5. Dans ce cas, la valeur correspondant à l'indice colonne 3 est stockée dans la mémoire MCF d'adresse 5, tandis que la valeur correspondant à l'indice colonne 5 est stockée dans la mémoire MCF d'adresse 3 (figure 6b).

A l'étape E, le pixel $b_0$ en cours d'analyse n'étant pas connexe aux pixels déjà analysés, seules les deux transitions présentes dans la fenêtre F, respectivement horizontale et verticale, sont liées l'une à l'autre dans la frontière, de sorte que la valeur correspondant à l'indice colonne 2 repérant cette transition verticale est stockée dans la mémoire ACH, tandis que la valeur 0 est stockée dans la mémoire MCF d'adresse 2 (figure 6b).

Par contre, à l'étape F, par la connexité des pixels, les deux transitions verticales repérées respectivement par les indices colonnes 2 et 5 sont liées l'une à l'autre dans la frontière. Le stockage de leurs positions respectives s'effectue d'une manière identique à celle relative à l'étape C. Toujours à cette étape F, la configuration des quatre pixels formant la fenêtre F est représentative d'une éventuelle fin de contour : on la valide en comparant ACH avec ICOL ; comme ACH = 2 et ICOL = 3 (figure 6b), il n'y a donc pas identité, ce qui signifie qu'il ne s'agit pas de la fin du contour choisi.

L'analyse du contour se poursuit comme précédemment en mémorisant à chaque pas les transitions de contour associées dans la frontière de l'image, et la fin de ce contour est déterminée à l'étape T (figure 6a) pour laquelle la configuration des quatre pixels répond à la combinaison binaire (1000) avec identitié entre ACH et ICOL (ACH = ICOL = 5 ; figure 6b).

Dès lors, on identifie l'origine du contour considéré par ses coordonnées, soit ILIG = 5 et ICOL = 4 (figure 6a, étape T), qui correspondent respectivement à ILIG - 1 et ICOL - 1 du dernier pixel $b_0$ analysé ; ces coordonnées de l'origine du contour sont mémorisées dans la mémoire 20 représentée sur la figure 1.

Après identification de l'origine de chaque contour d'objet, les coordonnées de celle-ci sont ensuite transmises à une unité centrale de traitement 22 (figure 1) utilisée par exemple dans un automate programmable pour commander des robots.

D'autre part, à partir des coordonnées de l'origine du contour, il est possible de coder le contour segmenté par la méthode connue dite de "codage" par vecteurs de Freeman. A cet effet, on pourra se reporter à l'article "Computer Processing of Line-Drawing Images" de H. Freeman-Computing Surveys, volume 6, No 1, Mars 1974, pages 57 à 97. Une fois le codage des divers contours d'objets effectué dans le circuit 24 (figure 1), celui-ci est transmis à l'unité de traitement 22 afin de calculer certains paramètres liés à chacun des objets, tels que leur surface, leur centre de gravité, etc...

Au cours de l'analyse séquentielle de chacun des pixels formant l'image binaire, comme on vient de le voir, il est également possible de calculer le périmètre de chaque contour d'objet. Sur la figure 1, on a représenté en 26 un circuit permettant de calculer ledit périmètre dont la valeur est mémorisée dans un registre 27 noté MP et associé à un registre tampon 28 noté RP et mémorisant des valeurs intermédiares du périmètre.

Pour le calcul du périmètre au fur et à mesure de l'analyse du contour, on met en oeuvre un algorithme de traitement en prenant en compte les segments qui relient les milieux des transitions (horizontales et verticales) considérées lors de l'analyse de ce contour.

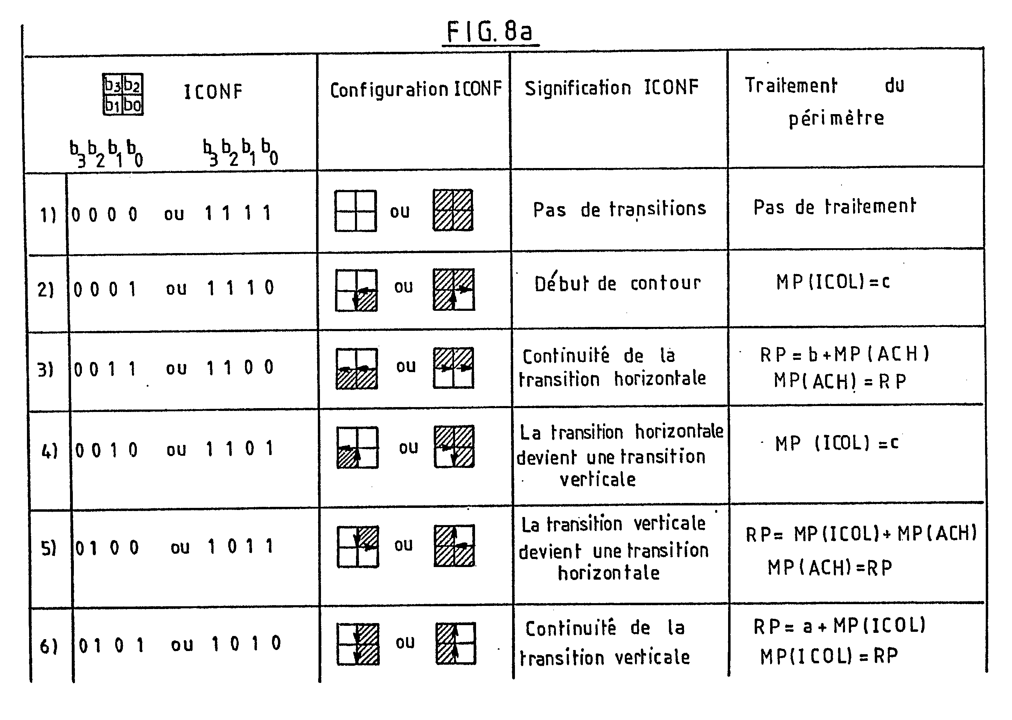

A titre illustratif, on a représenté en traits forts $S_i$ sur la figure 7, les divers segments pris en compte pour calculer le périmètre du contour particulier choisi en exemple sur la figure 2 ; sur la gauche de cette figure 7, on a représenté par a, b et c les dimensions d'un pixel analysé $b_0$, de sorte que les segments considérés pour le calcul du périmètre du contour ont pour dimensions a, b et c/2.

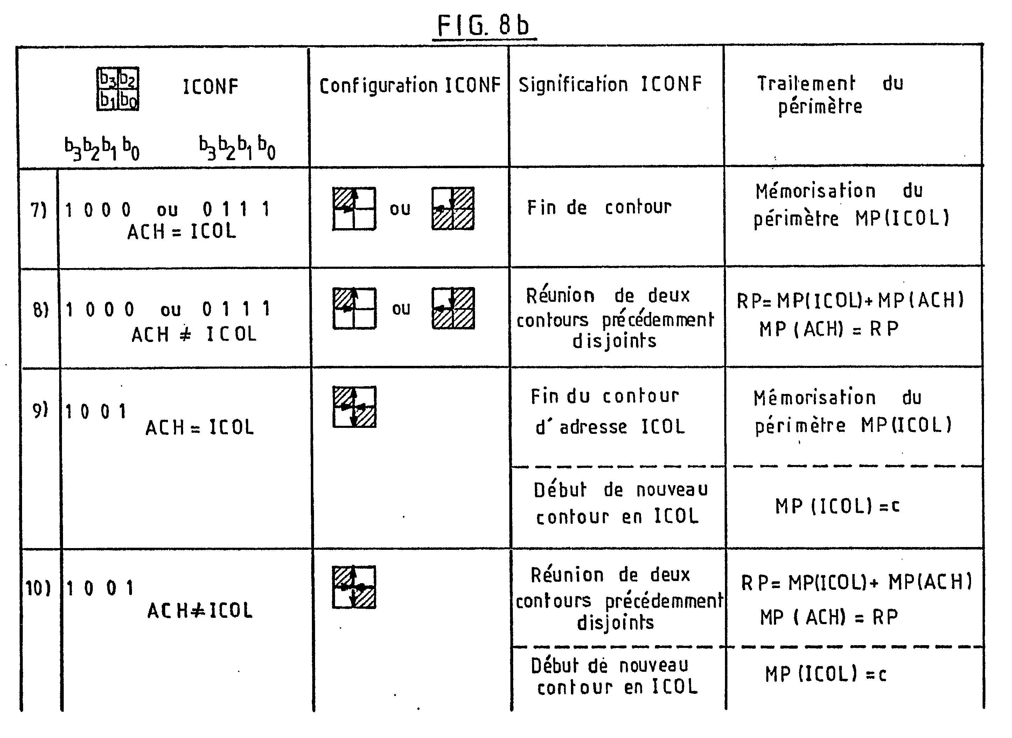

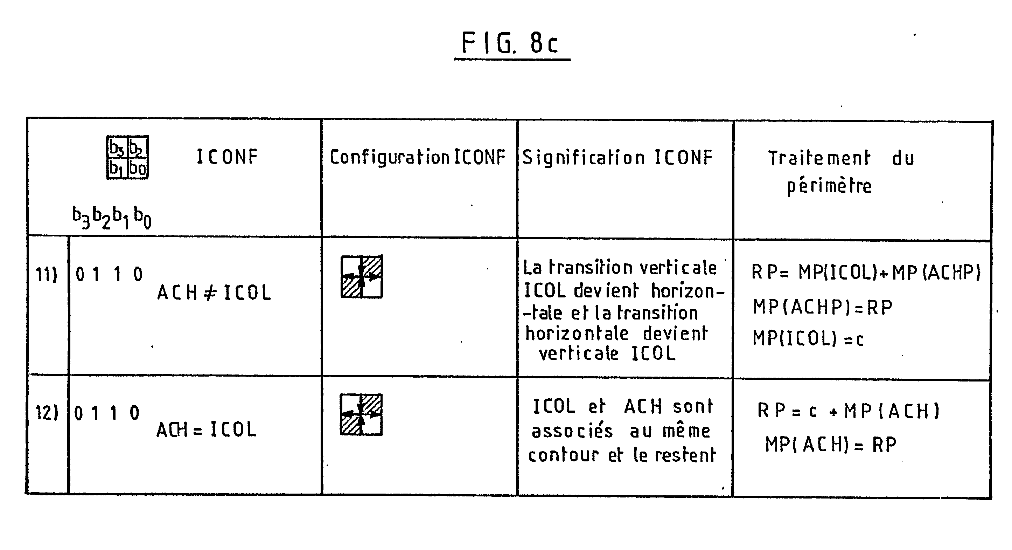

Les figures 8a à 8c représentent un tableau indiquant le traitement du périmètre à effectuer à chaque pas de l'algorithme selon les mêmes configurations binaires ICONF illustrées sur les figures 5a à 5c. On notera que la valeur c, et non pas c/2, apparaît dans la colonne "Traitement du périmètre" de ce tableau, par exemple aux second et quatrième traitements : cette valeur c se justifie par le fait qu'on sait qu'une transition verticale de début de contour est toujours liée à une autre transition verticale, de sorte qu'on peut avantageusement mémoriser dès le début de contour la valeur c pour ces deux transitions associées l'une à l'autre.

Après calcul du périmètre de chaque contour d'objet, sa valeur est mémorisée dans une mémoire 30 (figure 1), puis est transmise à l'unité centrale de traitement 22.

## Revendications

1. Procédé pour identifier les contours fermés d'objets placés sur une surface (2) et contenus dans un champ visuel, consistant :
- à former une image binaire échantillonnée du champ visuel selon une répartition en lignes et en colonnes de pixels contigus de forme polygonale, repérés par des indices de ligne (ILIG) et de colonne (ICOL) et étant affectés d'une première valeur binaire dans le cas de leur appartenance aux objets ou d'une seconde valeur binaire différente de la première dans le cas contraire, de sorte que les contours d'objets sont constitués d'un ensemble de segments élémentaires appelés transitions se présentant les unes par rapport aux autres selon au moins deux directions différentes et séparant chacune deux pixels adjacents de valeurs binaires respectives différentes, les pixels affectés de la première valeur binaire étant dits connexes s'ils ont de proche en proche un point ou un côté commun ;
- à analyser l'image séquentiellement point par point et ligne par ligne, à partir d'une fenêtre formée par le pixel en cours d'analyse et par des pixels voisins situés sur la ligne et la colonne précédant immédiatement la ligne et la colonne du pixel en cours d'analyse,
caractérisé en ce que l'analyse de l'image consiste, au fur et à mesure de la prise en compte de chaque pixel ($b_0$) :
(a) à déterminer les transitions présentes dans la fenêtre ;
(b) à traiter uniquement les transitions consécutives de directions respectives différentes présentes dans la fenêtre, en tenant compte de la connexité existant entre les pixels affectés de la première valeur binaire de façon à associer l'une à l'autre deux transitions dites extrêmes d'un même contour présentes dans une frontière de l'image qui est constituée par l'ensemble des pixels déjà analysés de l'image et ayant un pixel voisin non encore analysé, ce traitement consistant :
- à mémoriser la position des deux transitions extrêmes d'un même contour qui sont associées l'une à l'autre dans la frontière de l'image,
- à déterminer une fin de contour d'objet lorsque les deux transitions extrêmes associées l'une à l'autre se rejoignent.

2. Procédé selon la revendication 1,
caractérisé en ce que les pixels sont de forme rectangulaire, en ce que chaque transition de contour d'objet se présente selon une direction horizontale ou verticale, en ce que les transitions verticales ($T_V$) sont repérées par les indices colonnes (ICOL) repérant les pixels, et en ce que la mémorisation de la position des deux transitions extrêmes d'un même contour, associées l'une à l'autre dans la frontière et étant soit verticales toutes les deux soit respectivement verticale et horizontale, consiste au fur et à mesure de la prise en compte de chaque pixel :
- dans le cas de deux transitions extrêmes verticales ($T_V$) associées l'une à l'autre, à stocker, pour chacune de ces deux transitions verticales, l'indice colonne la repérant dans une mémoire (16) dont l'adresse correspond à l'indice colonne repérant sa transition verticale associée ;
- dans le cas d'une transition extrême verticale ($T_V$) associée à une transition extrême horizontale ($T_H$), à stocker une valeur prédéterminée dans une mémoire (16) dont l'adresse correspond à l'indice colonne repérant la transition verticale associée, et à stocker cet indice colonne dans un registre (17).

3. Procédé selon la revendication 2,
caractérisé en ce que la valeur prédéterminée stockée dans la mémoire (16) est la valeur 0.

4. Procédé selon les revendications 1 et 2,
caractérisé en ce que la détermination de la fin d'un contour d'objet est réalisée pour une transition extrême verticale ($T_V$) associée à une transition extrême horizontale ($T_H$), et avec identité entre, d'une part, l'indice colonne stocké dans le registre (17) et repérant cette transition verticale et, d'autre part, l'indice colonne repérant le pixel correspondant en cours d'analyse.

5. Procédé selon l'une des revendications 2 à 4,
caractérisé en ce que la fenêtre servant à l'analyse de l'image est formée par le pixel en cours d'analyse et par les trois pixels voisins situés sur la ligne et la colonne précédant immédiatement la ligne et la colonne du pixel en cours d'analyse.

6. Procédé selon l'une des revendications précédentes,
caractérisé en ce qu'il consiste en outre à calculer, au cours de l'analyse séquentielle de l'image, le périmètre de chaque contour d'objet.

7. Dispositif pour identifier les contours fermés d'objets placés sur une surface pour la mise en oeuvre du procédé selon l'une des revendications 1 à 5, comportant :
- une caméra vidéo (3) adaptée pour délivrer un signal définissant une image des objets constituée de pixels de forme polygonale, répartis en lignes et en colonnes, et repérés par des indices de ligne (ILIG) et de colonne (ICOL) ;
- des moyens (5) pour numériser les pixels de l'image selon deux niveaux de luminance auxquels sont attribuées respectivement deux valeurs binaires, de sorte que les contours d'objets sont formés par des transitions séparant chacune deux pixels adjacents affectés respectivement des deux valeurs binaires, ces transitions se présentant les unes par rapport aux autres selon au moins deux directions différentes, et les pixels affectés d'une même valeur binaire étant dits connexes et correspondant à un même objet s'ils ont de proche en proche un point ou un côté commun ;
- des premiers moyens (7, 8, 9) pour mémoriser simultanément les valeurs binaires respectives et les indices ligne et colonne respectifs des pixels ;
- des seconds moyens (13) pour mémoriser successivement et ligne par ligne les valeurs binaires respectives de plusieurs pixels pris en compte selon une configuration constituée par le pixel à analyser et par des pixels voisins ayant des indices ligne et colonne précédant immédiatement ceux du pixel à analyser,
caractérisé en ce que le dispositif comprend :
- des moyens (15) associés aux seconds moyens de mémorisation, pour traiter uniquement les configurations successives de pixels présentant chacune des transitions consécutives de directions respectives différentes, de façon à associer l'une à l'autre deux transitions dites extrêmes d'un même contour présentes dans une frontière constituée par l'ensemble des pixels déjà analysés et dont les valeurs binaires respectives ont déjà été mémorisées, et ayant un pixel voisin non encore analysé, et
- des moyens (16, 17) pour stocker successivement les deux transitions extrêmes d'un même contour, associées l'une à l'autre dans la frontière lors du traitement des configurations considérées de pixels.

8. Dispositif selon la revendication 7,
caractérisé en ce que chaque transition de contour d'objet se présente selon une direction horizontale ou verticale, et en ce que les moyens de stockage comportent :
- N mémoires (16), N étant également le nombre de colonnes de l'image binaire, pour la mémorisation des positions respectives de deux transitions extrêmes verticales ($T_V$) associées l'une à l'autre dans la frontière, et
- une seule mémoire (17) pour la mémorisation de la position d'une transition extrême verticale ($T_V$) lorsqu'elle est associée, dans la frontière, à une transition extrême horizontale ($T_H$).

9. Dispositif selon l'une des revendications 7 et 8,
caractérisé en ce qu'il comporte des troisièmes moyens (20) pour mémoriser les indices ligne et colonne du pixel correspondant à chaque fin de contour d'objet.

**Claims**

1. Method for identifying the closed contours of objects placed on a surface (2) and contained in a visual field, consisting:
- in forming a sampled binary image of the visual field by a line and column distribution of adjacent pixels of polygonal shape, located by line (ILIG) and column (ICOL) indices and bearing a first binary value if they belong to the objects or a second binary value different from the first one in the opposite case, so that the contours of objects are formed of a set of elementary segments called transitions occurring in at least two different directions, with respect to each other, and each separating two adjacent pixels with respective different binary values, the pixels bearing the first binary value being said to be connective if they have by degrees a common point or side;
- in analysing the image sequentially point by point and line by line from a window formed by the pixel being analysed and by adjacent pixels situated on the line and the column immediately preceding the line and column of the pixel being analysed, characterized in that the analysis of the image consists, as each pixel ($b_0$) is taken into account:
  a) in determining the transitions present in the window;
  b) in processing solely the consecutive transitions with respective different directions present in the window, while taking into account the connectivity existing between the pixels bearing the first binary value so as to associate with each other two so-called endmost transitions of the same contour present in a frontier of the image which is formed by the set of pixels already analysed of the image and having an adjacent pixel not yet analysed, this processing consisting:
- in storing the position of the two endmost transitions of the same contour, which are associated with each other in the frontier of the image;
- in determining an object contour end when the two endmost transitions associated with each other join up with each other.

2. Method according to claim 1, characterized in that the pixels have a rectangular shape, in that each object contour transition occurs in a horizontal or vertical direction, in that the vertical transitions ($T_V$) are located by the column indices (ICOL) locating the pixels and in that storage of the position of the two endmost transitions of the same contour, associated with each other in the frontier and being either both vertical or respectively vertical and horizontal, consists, as each pixel is taken into account:
- in the case of two vertical endmost transitions ($T_V$) associated with each other, in storing, for each of these two vertical transitions, the column index locating it in a memory (16) whose address corresponds to the column index locating its associated vertical transition,
- in the case of an endmost vertical transition ($T_V$) associated with an endmost horizontal transition ($T_H$), in storing a predetermined value in a memory (16) whose address corresponds to the column index locating the associated vertical transition and in storing this column index in a register (17).

3. Method according to claim 2, characterized in that the predetermined value stored in the memory (16) is the value 0.

4. Method according to claims 1 and 2, characterized in that the end of an object contour is determined for a vertical endmost transition ($T_V$) associated with a horizontal endmost transition ($T_H$) with identity between, on the one hand, the column index stored in the register (17) and locating this vertical transition and, on the other hand, the column index locating the corresponding pixel during analysis.

5. Method according to one of claims 2 to 4, characterized in that the window serving for analysing the image is formed by the pixel being analysed and by the three adjacent pixels situated on the line and column immediately preceding the line and column of the pixel being analysed.

6. Method according to one of the preceding claims, characterized in that it further consists in computing, during the sequential analysis of the image, the perimeter of each object contour.

7. Device for identifying the closed contours of objects placed on a surface for implementing the method according to one of claims 1 to 5, comprising:
— a video camera (3) adapted for delivering a signal defining an image of the objects formed of polygonal shaped pixels, distributed in lines and columns, and located by line (ILIG) and column (ICOL) indices;
— means (5) for digitizing the pixels of the image on two luminance levels to which are respectively attributed two binary values, so that the contours of objects are formed by transitions each separating two adjacent pixels bearing respectively the two binary values, these transitions occurring with respect to each other in at least two different directions, and the pixels bearing the same binary value being called connective and corresponding to the same object if they have by degrees a common point or side.
— first means (7, 8, 9) for storing simultaneously the respective binary values and the respective line and column indices of the pixels;
— second means (13) for successively and line by line storing the respective binary values of several pixels taken into account in a configuration formed by the pixel to be analysed and by adjacent pixels having line and column indices immediately preceding those of the pixel to be analysed, characterized in that the device comprises:
— means (15) associated with the second storage means for processing only the successive configurations of pixels each having consecutive transitions in different respective directions, so as to associate with each other two so-called endmost transitions of the same contour present in a frontier formed by the set of pixels already analysed and whose respective binary values have already been stored, and having an adjacent pixel not yet analysed, and
— means (16, 17) for successively storing the two endmost transitions of the same contour, associated with each other in the frontier during processing of the pixel configurations considered.

8. Device according to claim 7, characterized in that each object contour transition is in a horizontal or vertical direction and in that the storage means comprises:
— N memories (16), N being also the number of columns of the binary image, for the storage of the respective positions of two vertical endmost transitions ($T_V$) associated with each other in the frontier, and
— a single memory (17) for storing the position of a vertical endmost transition ($T_V$) when it is associated in the frontier with a horizontal endmost transition ($T_H$).

9. Device according to one of claims 7 and 8, characterized in that it comprises third means (20) for storing the line and column indices of the pixel corresponding to each object contour end.

## Patentansprüche

1. Verfahren zur Identifizierung der abgeschlossenen Umrisse von auf einer Oberfläche (2) angeordneten und in einem Blickfeld enthaltenen Gegenständen, bei dem:
— ein binäres, in Abschnitte zerlegtes Bild des Blickfeldes gebildet wird, in dem benachbarte vieleckige Bildelemente auf Linien und Kolonnen verteilt und durch Linien (ILIG)- und Kolonnen (ICOL)angaben erfaßt werden und denen ein erster binärer Wert zugeordnet wird, wenn sie zu den Gegenständen gehören oder ein zweiter, sich vom ersten unterscheidender binärer Wert, wenn dies nicht der Fall ist, sodaß die Gegenstandsumrisse aus einer Reihe von elementaren Abschnitten bestehen, die Übergänge genannt werden, welche im Verhältnis zueinander in mindestens zwei Richtungen verlaufen und jeweils zwei benachbarte Bildelemente mit jeweils verschiedenen binären Werten trennen und die Bildelemente, denen der erste Wert zugeordnet ist, als verwandt bezeichnet werden, wenn sie graduell einen gemeinsamen Punkt oder eine gemeinsame Seite besitzen;
— das Bild sequentiell Punkt für Punkt und Linie für Linie analysiert wird, durch ein Fenster, gebildet vom Bildelement, das gerade analysiert wird und benachbarten Bildelementen, welche auf der direkt vor der Linie und Kolonne dieses Bildelementes befindlichen Linie und Kolonne angeordnet sind, dadurch gekennzeichnet, daß die Bildanalyse, im Maße wie sie jedes Bildelement ($b_0$) in Betracht zieht, darin besteht:
a) die im Fenster auftretenden Übergänge zu bestimmen,
b) einzig die aufeinanderfolgenden Bildübergänge in jeweils verschiedenen Richtungen, die im Fenster auftreten, zu verarbeiten und dabei die zwischen den Bildelementen mit dem ersten binären Wert bestehende Verwandtschaft in Betracht zu ziehen, um zwei als extrem bezeichnete Übergänge des gleichen Umrisses einander zuzuordnen, die an einer Grenze des Bildes auftreten, welches aus der Gesamtheit der schon analysierten Bildelemente des Bildes besteht und ein noch nicht analysiertes Bildelement aufweist, wobei die Verarbeitung darin besteht, daß:

- die Anordnung der beiden Endübergänge des gleichen Umrisses, die an der Bildgrenze einander zugeordnet sind, gespeichert wird,
- das Ende eines Gegenstandsumrisses bestimmt wird, wenn die beiden einander zugeordneten Endübergänge zusammentreffen.

2. Verfahren nach Anspruch 1, dadurch gekennzeichnet, daß die Bildelemente rechteckig sind, daß jeder Übergang des Gegenstandsumrisses in waagerechter oder senkrechter Richtung verläuft, daß die senkrechten Übergänge ($T_V$) durch Kolonnenangaben (ICOL) zur Erfassung der Bildelemente erfaßt werden, daß die Speicherung der Anordnung der beiden an der Grenze einander zugeordneten Endübergänge des gleichen Umrisses, die entweder beide senkrecht oder einer senkrecht und der andere waagerecht verlaufen, im Maße wie jedes Bildelement in Betracht gezogen wird, darin besteht:

- wenn es sich um zwei senkrechte, einander zugeordnete Endübergänge ($T_V$) handelt, für jeden dieser beiden senkrechten Übergänge die Kolonnenangabe, welche ihn erfaßt, in einen Speicher (16) einzugeben, dessen Adresse der Kolonnenangabe entspricht, die den zugeordneten senkrechten Übergang erfaßt,
- wenn es sich um einen senkrechten Endübergang ($T_V$) handelt, der einem waagerechten Endübergang ($T_H$) zugeordnet ist, einem bestimmten Wert in einen Speicher (16) einzugeben, dessen Adresse der Kolonnenangabe entspricht, welche den zugeordneten senkrechten Übergang erfaßt und diese Kolonnenangabe in ein Register (17) einzuspeichern.

3. Verfahren nach Anspruch 2, dadurch gekennzeichnet, daß der in den Speicher (16) eingegebene bestimmte Wert der Wert 0 ist.

4. Verfahren nach den Ansprüchen 1 und 2, dadurch gekennzeichnet, daß das Ende eines Gegenstandsumrisses für einen senkrechten Endübergang ($T_V$), der einem waagerechten Endübergang ($T_H$) zugeordnet ist, bestimmt wird und Identität besteht einerseits zwischen der Kolonnenangabe, die ins Register (17) eingegeben wurde, und besagten senkrechten Übergang erfaßt und andererseits der Kolonnenangabe, welche das entsprechende Bildelement erfaßt, das gerade analysiert wird.

5. Verfahren nach einem der Ansprüche 2 bis 4, dadurch gekennzeichnet, daß das Fenster zur Bildanalyse aus dem Bildelement besteht, das gerade analysiert wird, sowie aus den drei benachbarten Bildelementen, die auf der direkt vor der Linie und Kolonne des gerade analysierten Bildelementes befindlichen Linie und Kolonne angeordnet sind.

6. Verfahren nach einem der vorhergehenden Ansprüche, dadurch gekennzeichnet, daß es außerdem darin besteht, im Laufe der sequentiellen Analyse des Bildes den Umfang eines jeden Gegenstandsumrisses zu berechnen.

7. Vorrichtung zur Identifizierung der abgeschlossenen Umrisse von auf einer Fläche angeordneten Gegenständen, zur Anwendung des Verfahrens nach einem der Ansprüche 1 bis 5, mit:

- einer Videokamera (3), die ein Signal abgeben kann, welches ein Bild des Gegenstandes definiert, das aus in Linien und Kolonnen angeordneten vieleckigen Bildelementen besteht, die durch Linien (ILIG)- und Kolonnen (ICOL)angaben erfaßt werden;
- Mitteln (5), um die Bildelemente gemäß zwei Leuchtdichteniveaus zu digitalisieren, denen jeweils zwei binäre Werte zugeordnet werden, so daß die Umrisse der Gegenstände durch Übergänge gebildet werden, die jeweils zwei benachbarte Bildelemente trennen, denen jeweils die beiden Binärwerte zugeordnet sind, und besagte Übergänge im Verhältnis zueinander mindestens in zwei verschiedenen Richtungen verlaufen, wobei die Bildelemente, denen der gleiche Binärwert zugeordnet ist, als verwandt bezeichnet werden und zum gleichen Gegenstand gehören, wenn sie graduell einen gemeinsamen Punkt oder eine gemeinsame Seite aufweisen;
- ersten Mitteln (7, 8, 9), um gleichzeitig die entsprechenden Binärwerte und die entsprechenden Linien- und Kolonnenangaben der Bildelemente einzuspeichern;
- zweiten Mitteln (13), um nacheinander und Linie für Linie die entsprechenden Binärwerte mehrerer Bildelemente einzuspeichern, welche einer Konfiguration entnommen werden, zu der das zu analysierende Bildelement gehört, sowie die benachbarten Bildelemente, deren Linien und Kolonnen direkt vor denen des zu analysierenden Bildelementes angeordnet sind, dadurch gekennzeichnet, daß die Vorrichtung aufweist:

- den zweiten Speichermitteln zugeordnete Mittel (15), um einzig die aufeinanderfolgenden Bildelementkonfigurationen zu verarbeiten, die jeweils aufeinanderfolgende Übergänge verschiedener Richtung aufweisen, um zwei sogenannte Endübergänge des gleichen Umrisses einander zuzuordnen, die an einer von der Gesamtheit der schon analysierten Bildelemente gebildeten Grenze auftreten, deren jeweilige Binärwerte schon eingespeichert wurden und die ein noch nicht analysiertes Bildelement aufweisen;
- Mittel (16, 17), um nacheinander die beiden Endübergänge des gleichen Umrisses einzuspeichern, die bei der Verarbeitung der in Betracht gezogenen Bildelementkonfigurationen an der Grenze einander zugeordnet wurden.

8. Vorrichtung nach Anspruch 7, dadurch gekennzeichnet, daß jeder Übergang eines Gegenstandsumrisses waagerecht oder senkrecht verläuft und die Speichermittel aufweisen:

- N Speicher (16), wobei N gleichzeitig die Anzahl der Kolonnen des Binärbildes ist, zur Einspeicherung der entsprechenden Anordnung zweier senkrechter an der Grenze einander zugeordneter Endübergänge ($T_V$), und
- einen einzigen Speicher (17) zur Speicherung der Anordnung eines senkrechten Endüber-

gangs ($T_V$), wenn dieser an der Grenze einem waagerechten Endübergang ($T_H$) zugeordnet ist.

9. Vorrichtung nach einem der Ansprüche 7 und 8, dadurch gekennzeichnet, daß sie dritte Mittel (20) aufweist, um die Linien und Kolonnenangaben des Bildelementes einzuspeichern, das jeweils dem Ende des Gegenstandsumrisses entspricht.

FIG.1

FIG.2

FIG.3

FIG.4

EP 0 206 853 B1

## FIG. 5a

| $\begin{array}{cc}b_3 & b_2\\ b_1 & b_0\end{array}$  I CONF $\quad b_3\,b_2\,b_1\,b_0 \qquad b_3\,b_2\,b_1\,b_0$ | Configuration ICONF | Signification ICONF | Traitement des transitions |
|---|---|---|---|
| 1) 0 0 0 0   ou   1 1 1 1 | ou | Pas de transitions | Pas de traitement |
| 2) 0 0 0 1   ou   1 1 1 0 | ou | Début de contour | MCF (ICOL) = 0 ACH = ICOL |
| 3) 0 0 1 1   ou   1 1 0 0 | ou | Continuité de la transition horizontale | Pas de traitement |
| 4) 0 0 1 0   ou   1 1 0 1 | ou | La transition horizontale devient une transition verticale | MCF (ICOL) = ACH MCF (ACH) = ICOL |
| 5) 0 1 0 0   ou   1 0 1 1 | ou | La transition verticale devient une transition horizontale | ACH = MCF (ICOL) MCF (ACH) = 0 |
| 6) 0 1 0 1   ou   1 0 1 0 | ou | Continuité de la transition verticale | Pas de traitement |

## FIG. 5b

| ICONF $\begin{smallmatrix}b_3&b_2\\b_1&b_0\end{smallmatrix}$ $b_3 b_2 b_1 b_0$ $\quad b_3 b_2 b_1 b_0$ | Configuration ICONF | Signification ICONF | Traitement des transitions |
|---|---|---|---|
| 7) 1 0 0 0 ou 0 1 1 1 <br> ACH = ICOL | ☐ ou ☐ | Fin de contour | Mémorisation des coordonnées ILIG −1 et ICOL −1 du dernier point analysé du contour |
| 8) 1 0 0 0 ou 0 1 1 1 <br> ACH ≠ ICOL | ☐ ou ☐ | Réunion de deux contours précédemment disjoints | ACHP = MCF(ICOL) <br> MCF(ACH) = ACHP <br> MCF(ACHP) = ACH |
| 9) 1 0 0 1 <br> ACH = ICOL | ☐ | Fin du contour d'adresse ICOL | Mémorisation des coordonnées ILIG −1 et ICOL −1 du dernier point analysé du contour |
| | | Début de nouveau contour en ICOL | Pas de traitement |
| 10) 1 0 0 1 <br> ACH ≠ ICOL | ☐ | Réunion de deux contours précédemment disjoints | ACHP = MCF(ICOL) <br> MCF(ACH) = ACHP <br> MCF(ACHP) = ACH <br> ACH = ICOL |
| | | Début de nouveau contour en ICOL | MCF(ICOL) = 0 |

EP 0 206 853 B1

## FIG. 5c

| $b_3 b_2 b_1 b_0$ ICONF $b_3 b_2 b_1 b_0$ | Configuration ICONF | Signification ICONF | Traitement des transitions |
|---|---|---|---|
| 11) 0 1 1 0 ACH ≠ ICOL | | La transition verticale ICOL devient horizon--tale et la transition horizontale devient verticale ICOL | ACHP = MCF(ICOL) MCF(ACH) = ICOL MCF(ACHP) = 0 MCF(ICOL) = ACH ACH = ACHP |
| 12) 0 1 1 0 ACH = ICOL | | ICOL et ACH sont associés au même contour et le restent | Pas de traitement |

FIG. 7

EP 0 206 853 B1

FIG. 6a

## FIG. 6b

| Etapes | Début cycle | A | B | C | D | E | F | G | H | I | J | K | L | M | N | O | P | Q | R | S | T |
|---|---|---|---|---|---|---|---|---|---|---|---|---|---|---|---|---|---|---|---|---|---|
| ICOL | | 3 | 4 | 5 | 6 | 2 | 3 | 4 | 5 | 6 | 7 | 2 | 3 | 4 | 5 | 6 | 7 | 2 | 3 | 4 | 5 |
| ILIG | | 3 | 3 | 3 | 3 | 4 | 4 | 4 | 4 | 4 | 4 | 5 | 5 | 5 | 5 | 5 | 5 | 6 | 6 | 6 | 6 |
| | | | | | | | | | | | | | | | | | | | | | |
| MCF (1) | 0 | | | | | | | | | | | | | | | | | | | | |
| MCF (2) | 0 | | | | | 0 | ⑤ | | 0 | ⑥ | | | | | | | | | | | |
| MCF (3) | 0 | 0 | | ⑤ | | | | | | | | | | | | | | | | | |
| MCF (4) | 0 | | | | | | | | | | | | | ⑥ | | ⑤ | | | | | |
| MCF (5) | 0 | | | ③ | | | ② | | | | | | | | 0 | ④ | | | | 0 | 0 |
| MCF (6) | 0 | | | | | | | | | ② | | 0 | | ④ | | | | | | | |
| | | | | | | | | | | | | | | | | | | | | | |
| ACH | 0 | 3 | | | | 2 | | | 2 | | | 6 | | | 5 | | | | | 5 | 5 |
| ACHP | | | | | | | 5 | | | | | | | | | 4 | | | | | |

EP 0 206 853 B1

## FIG. 8a

| $\begin{array}{cc}b_3&b_2\\b_1&b_0\end{array}$ ICONF $\quad b_3\,b_2\,b_1\,b_0 \qquad b_3\,b_2\,b_1\,b_0$ | Configuration ICONF | Signification ICONF | Traitement du périmètre |
|---|---|---|---|
| 1) 0 0 0 0 ou 1 1 1 1 | ou | Pas de transitions | Pas de traitement |
| 2) 0 0 0 1 ou 1 1 1 0 | ou | Début de contour | $MP(ICOL) = c$ |
| 3) 0 0 1 1 ou 1 1 0 0 | ou | Continuité de la transition horizontale | $RP = b + MP(ACH)$ <br> $MP(ACH) = RP$ |
| 4) 0 0 1 0 ou 1 1 0 1 | ou | La transition horizontale devient une transition verticale | $MP(ICOL) = c$ |
| 5) 0 1 0 0 ou 1 0 1 1 | ou | La transition verticale devient une transition horizontale | $RP = MP(ICOL) + MP(ACH)$ <br> $MP(ACH) = RP$ |
| 6) 0 1 0 1 ou 1 0 1 0 | ou | Continuité de la transition verticale | $RP = a + MP(ICOL)$ <br> $MP(ICOL) = RP$ |

EP 0 206 853 B1

## FIG. 8b

| $\begin{array}{|c|c|}\hline b_3 & b_2 \\ \hline b_1 & b_0 \\ \hline\end{array}$ ICONF<br><br>$b_3 b_2 b_1 b_0 \qquad b_3 b_2 b_1 b_0$ | Configuration ICONF | Signification ICONF | Traitement du périmètre |
|---|---|---|---|
| 7) 1 0 0 0  ou  0 1 1 1<br>ACH = ICOL | ou | Fin de contour | Mémorisation du périmètre MP(ICOL) |
| 8) 1 0 0 0  ou  0 1 1 1<br>ACH ≠ ICOL | ou | Réunion de deux contours précédemment disjoints | RP = MP(ICOL) + MP(ACH)<br>MP(ACH) = RP |
| 9) 1 0 0 1<br>ACH = ICOL | | Fin du contour d'adresse ICOL | Mémorisation du périmètre MP(ICOL) |
| | | Début de nouveau contour en ICOL | MP(ICOL) = c |
| 10) 1 0 0 1<br>ACH ≠ ICOL | | Réunion de deux contours précédemment disjoints | RP = MP(ICOL) + MP(ACH)<br>MP(ACH) = RP |
| | | Début de nouveau contour en ICOL | MP(ICOL) = c |

EP 0 206 853 B1

# FIG. 8c

| $\begin{array}{cc} b_3 & b_2 \\ b_1 & b_0 \end{array}$ ICONF  $b_3 b_2 b_1 b_0$ | Configuration ICONF | Signification ICONF | Traitement du périmètre |
|---|---|---|---|
| 11) 0 1 1 0 $ACH \neq ICOL$ | | La transition verticale ICOL devient horizon--tale et la transition horizontale devient verticale ICOL | $RP = MP(ICOL) + MP(ACHP)$ $MP(ACHP) = RP$ $MP(ICOL) = c$ |
| 12) 0 1 1 0 $ACH = ICOL$ | | ICOL et ACH sont associés au même contour et le restent | $RP = c + MP(ACH)$ $MP(ACH) = RP$ |

EP 0 206 853 B1